# EUROPEAN PATENT APPLICATION

(11) **EP 4 831 825 A1**
(43) Date of publication of application: **28.10.2026**
(21) Application number: 25171956.3
(22) Date of filing: 23.04.2025
(51) Int. Cl.: G06F 16/215, G06F 16/242, G06F 16/2455, G06F 16/2458, G06F 16/3349

(54) **METHOD AND ARRANGEMENT FOR PROCESSING DATA AT LEAST CORRELATING WITH DATA OF AT LEAST A SENSOR, ESPECIALLY APPLIED IN AN INTERNET OF THINGS, IOT, DOMAIN, BY MEANS OF A TIME SERIES PROCESS**

(71) Applicant: Siemens Aktiengesellschaft, 80333 München (DE)
(72) Inventor: WEISS, Johannes, 96170 Lisberg (DE); NICHKAWADE, Pushkar, 411015 Pune (IN); ECKL, Roland, 91301 Forchheim (DE); BOSE, Ayan, 411012 Pune (IN); TELSCHIG, Kilian, 81543 München (DE); HOHENSTEIN, Uwe, 85591 Vaterstetten (DE)
(74) Representative: Siemens Patent Attorneys

(57) **Abstract**

The invention relates to a method for processing data at least correlating with data of at least a sensor, especially applied in an Internet of things, "loT", domain, by means of a time series process, whereby the time series process is arranged in such a way that if pre-configured aggregate data specified in a query is at least partially unavailable for the time service process dependent of at least a first parameter, which is at least correlating with the query, pre-configured aggregate data is made available for subsequent queries; and if the pre-configured aggregate data is completely available for the time service process, the pre-configured aggregate data is retrieved. The invention further relates to an arrangement characterized by means to carry out the method according to the invention.

## Description

The invention relates to a method for processing data at least correlating with data of at least a sensor, especially applied in an Internet of things, "loT", domain, by means of a time series process, according to the preamble of claim 1, as well as an arrangement for processing data at least correlating with data of at least a sensor, especially applied in an Internet of things, "loT", domain, by means of a time series process, according to the preamble of claim 13.

A time series database is generally understood as an arrangement and method optimized for storing and serving time series, i.e., sensor values that change over time, through associated pairs of at least a time and at least a value. It is known that time series databases are associated with industrial applications that could efficiently store measured values from sensory equipment, i.e., sensor data that is collected, is stored in a time series database, but time series database is increasingly also used to support a much broader range of applications.

The original and unfiltered data of a sensor is also called "raw data". For this purpose, the sensors' raw data is usually stored at the time series database, which can be then requested via a time series service. The data of a sensor is requested by an application typically via the time series service, which can serve the data from the time series database.

Often, it is undesirable to provide applications directly with raw sensor data due to the large volumes that need to be transmitted, leading to elevated resource consumption such as bandwidth and processing power, and consequently, high latency. Therefore, time series services usually offer methods for aggregating raw data using functions such as sum, average, integral, median, among others, over different time intervals like minute, hour, day, month, and year.

Despite reducing bandwidth usage, calculating these aggregates still imposes a significant processing workload and latency. To address this, aggregates are often pre-calculated, yet this introduces a combinatorial explosion of required pre-calculated aggregates since each sensor, aggregation method, and interval-length requires separate pre-calculated aggregates. This results in substantial computational demands upfront and considerable storage costs for maintaining the calculated results.

The underlying object of the invention is to provide a solution that overcomes the disadvantages of the prior art. In particular the underlying object of the invention is to provide an arrangement and a method that optimizes the efficiency in the processing and provision of sensor data, in particular aggregated sensor data, in a time series database.

This object is solved by the method for processing data at least correlating with data of at least a sensor, especially applied in an Internet of things, "loT", domain, by means of a time series process according to the features of the preamble of claim 1 through its characterizing features, as well as by the arrangement for processing data at least correlating with data of at least a sensor, especially applied in an Internet of things, "IoT", domain, by means of a time series process according to the features of the preamble of claim 13 through its characterizing features.

Unless otherwise specified in the following description, the terms "perform", "implement", "transform", "transfer", "calculate", "computer-assisted", "compute", "determine", "generate", "configure", "reconstruct", "ascertain", "capture", and the like-if mentioned-preferably refer to actions and/or processes and/or processing steps that change and/or generate data and/or convert the data into other data, where the data can particularly be represented or exist as physical quantities, for example as electrical impulses. In particular, the term "computer" or "processor" should be construed broadly to cover all electronic devices with data processing capabilities. Computers can thus be, for example, personal computers, servers, programmable logic controllers (PLCs), handheld computer systems, pocket PC devices, mobile phones, and other communication devices that can process data, as well as processors and other electronic data processing devices.

The term "computer-assisted" or "processor-assisted"-if mentioned-can be understood in connection with the invention as an implementation of the procedure in which a processor specifically executes at least one procedural step of the method.

A "processor"-if mentioned-can be understood in connection with the invention as a machine or an electronic circuit. A processor can be in particular a central processing unit (CPU), a microprocessor, or a microcontroller. A processor can also be an IC (integrated circuit), specifically an FPGA (field-programmable gate array) or an ASIC (application-specific integrated circuit), or a DSP (digital signal processor), or a GPU (graphics processing unit). Additionally, a processor can be understood as a virtual processor, a virtual machine, or a soft CPU. It can also be a programmable processor equipped with configuration steps to execute the said inventive method or configured to realize the inventive features of the method, the component, the modules, or other aspects and/or sub-aspects of the invention.

A "storage unit", "storage device", or "storage module" and the like-if mentioned-can be understood in connection with the invention as a volatile memory in the form of RAM (random-access memory) or a permanent storage such as a hard drive or a data carrier, as well as a combination of one or more of these elements to form a so-called cloud.

A "module", if mentioned, can be understood in connection with the invention as at least one processor and/or at least one storage unit for storing program instructions, which are physically located in one place, such as a part of a circuit board, functionally interconnected. For example, the processor is specially configured to execute the program instructions in such a way that the processor performs functions to implement or realize the inventive method or a step of the inventive method.

According to the method for processing data at least correlating with data of at least a sensor, especially applied in an Internet of things, "loT", domain, by means of a time series process, according to the invention, the time series process is arranged in such a way that if pre-configured aggregate data specified in a query is at least partially unavailable for the time service process, at least the parts of the pre-configured aggregate data is, dependent of at least a first parameter, which is at least correlating with the query, made available for subsequent queries; and if the pre-configured aggregate data is completely available for the time service process, the pre-configured aggregate data is retrieved.

With this the invention addresses and solves the problem that has been inventively recognized by the inventors, namely that according to the state of the art solution, that in order to limit the pre-calculated aggregates, only defined aggregation methods with defined interval-length are taken into account, which limits the required resources for processing and storage to a reasonable level but, in turn, leads to said problem that for example, when applications request for aggregated data that are not pre-calculated, this data cannot be served respectively served without querying the full data and calculating the aggregates during the request, which is costly at least in terms of resources and time, especially latency time.

However, with the subject matter of the invention it is possible to optimize time series service in this respect over time, as based on the evaluation of the first parameter at least for subsequent queries for the same pre-calculated aggregate data, it will be delivered much less costly in terms of resource allocation and time, especially latency.

These advantages are in particular reached as the inventive time series service is according to the invention may be further utilized to provide a function to analyze the query parameters, especially characteristics, in particular of the sensor data; which for example may correlate with how often aggregates for a certain sensor data, with what interval-length is requested. Finally, it may also utilize a pre-calculated aggregate service that is able to pre-calculate aggregates based on said parameter, for example said characteristic, in particular providing configuration data, i.e., what sensor data, what aggregation function, what interval-length is utilized for the pre-calculation, so that an update of the stored pre-calculation aggregate data may be performed in such a manner that for subsequent queries for the same pre-calculated aggregate data, an immediate response will be available.

The arrangement for processing data at least correlating with data of at least a sensor, especially applied in an Internet of things, "loT", domain, by means of a time series process according to the preamble of claim 1, is characterized by means for carrying out the method and/or one of its developments, thereby contributing to the implementation and, mutatis mutandis, to the realization of the advantages mentioned in connection with the method for protecting against image capture of a protectable content.

The arrangement helps to realize the method according to the invention especially modules and/or entities which are equipped and functionally interworking in such a manner that they are realizing at least one of the utilized entities, e.g., the sensor, the time series service, the monitoring, the evaluation, pre-calculation, storage and so forth.

Further advantageous embodiments and developments of the invention are specified in the dependent claims.

According to a preferred and advantageous embodiment of the method according to the invention if pre-configured aggregate data specified in a query is at least partially unavailable for the time service process at least the parts of the pre-configured aggregate data is generated ad-hoc and used to build the pre-configured aggregate data for subsequent queries. Although this leads to a latency, it is a beneficial development, as it allows for responding a valid result, when queries for this pre-configured aggregate data is not available in the storage for pre-calculated aggregate data, so that at least on the long run, this leads to a more efficient and more dynamic response of the method according to the invention.

According to yet another preferred and advantageous embodiment of the method according to the invention the updated pre-configured aggregate data is made available in such a manner that it is stored, especially in a database, in structured manner. If done so, it can be fast and with less resource allocation made available, when a subsequent query needs this pre-calculated aggregate data.

This advantage, among others, is enhanced when the additional or alternative embodiment is given, where the method according to the invention is further developed in such a manner that it comprises the further step of returning the at least parts of the pre-calculated aggregate results, if available and storing at least a characteristic of the query.

Yet another advantageous embodiment is given, if the method according to the invention is further developed in such a manner that the time series process comprises at least a first process for pre-calculation of aggregate data of the sensor, a storage for storing pre-calculated aggregate data of the sensor and a second process for calculation of pre-calculated aggregate data of the sensor ad-hoc, characterized by the further steps:
a) Extracting configuration data from the query, especially the first parameter;
b) Checking for the availability of at least parts of the pre-calculated aggregate data defined by the configuration data;
c) Returning the pre-calculated aggregate, if available and storing the configuration data;
d) Performing an ad-hoc calculation of at least parts of the requested pre-calculated aggregate data by means of the first process, if the pre-calculated aggregate data is at least partially unavailable and responding at least the result of the calculation;
e) Updating the configuration of the first process;
f) Prepare aggregates based on the configuration data;
g) Pre-calculating the aggregate data according to the updated configuration by means of the first process;
h) Updating the pre-calculated aggregates in the storage for storing pre-calculated aggregate data with the aggregate data that was pre-calculated according to the updated configuration.

With this embodiment dedicated processes are established to realize the services according to the inventive method and also dedicated further steps are defined, that allow for an effective, yet easy to implement, realization of the method according to the invention.

This might especially realize and allow for carrying the inventive method out in such a way that If an application, especially in the loT, for example but not limited to the industrial and/or building automation domain, is requesting aggregate data of a sensor for a defined interval-length:
- The time series service provided by the invention checking whether pre-calculated aggregates for sensor data and the given function and the given interval-length is available and
- If this is true the timeseries service is responding the results, whereby the time series service also notes that this query characteristic has been requested, and
- If it is not true the time series service is ad-hoc, i.e. on-the-fly, calculating the requested aggregate so that a response to application is ensured.
- Then, e.g. in case it was not true, i.e. done after the first query that required an on-the-fly calculation, the time series service configures, i.e. generates a definition for what data point in which granularity aggregates should be calculated and performs this calculation (generation) by utilizing the pre-calculated aggregate service in such a manner that for the requested sensor with the given interval-length and given aggregate function(s) pre-calculated aggregates should be prepared.
- Note: This can be done after the first query

This provides an efficient a fast application of the time series service, i.e. process, but also includes further advantages. For example, as becomes apparent, it allows for further developments which are considering that said data points of pre-calculated aggregate data may at least partially be available, or partially not available, i.e. in case of overlapping time-interval, say time-interval = T1 + T2, wherein for T1 pre-calculated aggregate(s) are available at hand and for T2 they aren't, then the time series service according to the invention, especially this embodiment, is intelligent enough to calculate on-the-fly aggregates reusing at least parts of pre-calculated aggregate data-point(s) relating to time interval T1 and performs ad-hoc, i.e. on-the-fly, calculation of aggregates relating to time interval T2.

A further preferred embodiment of the method according to the invention is characterized in that the configuration data comprises at least one of the following data: at least a parameter specifying the sensor data, at least a specified aggregation function or at least a value specifying an interval length, such as but not limited to sum, average, integral, median, among others, over different time intervals like minute, hour, day, month, and year, this allows for a minimum of characteristics needed to enable a pre-calculation process.

According to yet another preferred embodiment of the inventive updating the configuration of the first process is triggered, if the queried pre-calculated aggregate data is unavailable at least for the first time. With this a default trigger for utilizing reconfiguration of pre-calculation aggregate service. It is also possible to allow for counting unavailability of a requested aggregate data and to trigger the process, if a certain threshold is reached. In doing so, one can avoid a Flip-Flop like behavior of embodiments of the invention, especially the ones incorporating a self-cleaning mechanism that allows for removing or deleting pre-calculated data and/or raw data, which would lead to an ad-hoc calculation, if one of the next queries is requesting said removed or deleted data. It also allows for avoiding storing pre-calculated data for queries that are only singular events, so that the method according to the invention can focus on providing pre-calculated aggregate data, which is required on a regular basis.

This however is further enhanced, if additionally, or alternatively the method according to the invention is further developed in such a way that the parameters are monitored in such a manner as to check the degree of usage of the stored pre-calculated aggregate data.

According to a further embodiment, the method according to the invention is further developed in such a manner that the check is performed in such a way that the usage of each stored pre-calculated aggregate data is monitored, especially counted, and that at least a second parameter of the monitoring, especially a counted value, is evaluated, especially compared with a first predetermined threshold, and depending of the result, in particular if the counted value is below the first threshold, the pre-calculated aggregate data and the corresponding configuration data is removed from the respective storage, especially the first database.

With this an embodiment of the time series service according to the invention may be provided that is checking after a while, e.g. several days or week, if data from pre-calculated aggregates has been requested at all. If there is a configuration for a pre-calculated aggregate available that has not been requested for a while (i.e., a month), then this configuration gets removed and the pre-calculated aggregate data gets also deleted. Hence with this, a self-cleaning aspect is included that allows for that only those data is kept as pre-calculated aggregate that is really required, thereby limiting occupied resources and offering, especially in connection with other embodiments, to regularly re-balance/optimize the time- and/or resource-consumption of the method.

The same or similar advantageous effect is given by yet another embodiment of the method according to the invention, which is characterized in that the check is performed in such a way that raw-data of the sensor is stored, especially in a second database, and the usage said raw-data is monitored, especially counted, and that at least a second parameter of the monitoring, especially a counted value, is evaluated, especially compared with a second predetermined threshold, and depending of the result, in particular if the counted value is below the threshold, the pre-calculated aggregate data and the corresponding configuration data is manipulated in such a manner, that it is marked for archiving, in particular removal from the respective storage, especially the second database, to another storage, in particular a third database, thereby also allowing for optimization resource management with respect of raw-data that is usually also stored, e.g. in a database.

This might be further enhanced if the method according to the invention is further developed in such a manner that the check is continuously repeated according to a predetermined time interval. This allows for self-cleaning/optimizing the embodiments of the inventive time service on a regular basis.

Yet another advantageous embodiment of the invention is given, if the method according to the invention is characterized in that, the querying, the monitoring, the evaluation and or other intermediate results of the method steps according to one of the preceding claims, is at least partially used in connection with a deep-learning module, especially to train and/or query at least a deep-learning model in such a way that at least one of the method steps, in particular pre-calculation, deletion, removal and/or other intermediate steps of the method according to one of the preceding claims, is performed based on query results. Deep-learning applications such as artificial intelligence applications have huge potential in terms of optimization as the method generates and utilizes a lot of data and hence allows for numerous possibilities in either direction optimizing the method according to the invention and/or training of one or more deep-learning models. This might among others e.g. enhance pre-calculation, storage usage, i.e. self-cleaning and optimizing procedures and the like.

In the following, the invention is described in more detail and explained with reference to the embodiments shown in Figures 1 to 2. The figures illustrate:
- Figure 1 (FIG 1): shows schematically, as an embodiment of the inventive arrangement, a time series service; and
- Figure 2 (FIG 2): schematically shows a flowchart of an embodiment of the inventive method.

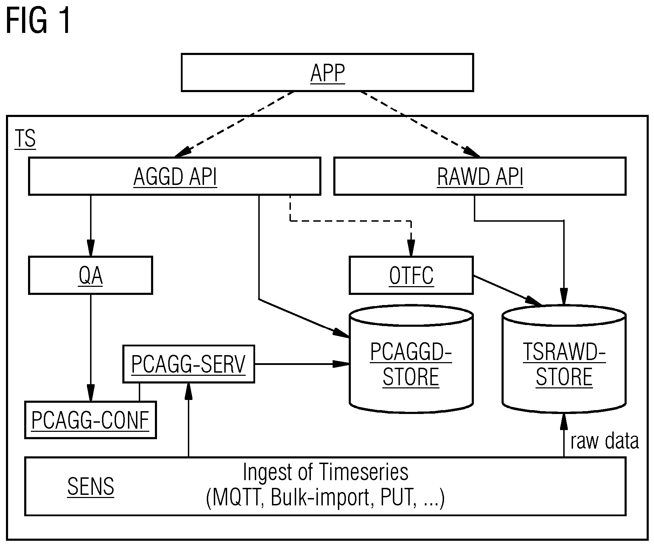

The embodiments explained in Figures 1 to 2 represent preferred embodiments and developments of the invention.

The following embodiments particularly illustrate exemplary ways of implementation, as real embodiments of the inventive teaching could appear, since it is both impossible and not conducive or necessary for understanding the invention to name all such implementation possibilities.

Furthermore, an expert in the field, familiar with the device claim and/or method claims, would be aware of all conventional methods for implementing the invention known from the prior art, making a separate disclosure in the description unnecessary.

In the embodiments, the described components of the embodiments each represent individual features of the invention that can further develop the invention independently of one another and can thus be considered as part of the invention individually or in a different combination than shown.

Furthermore, the described embodiments can be supplemented with further features already described of the invention.

The same reference numerals have the same meaning in the different figures.

Figure 1 shows an embodiment of the arrangement according to the invention. As can be seen it is assumed that there is an Application APP that can generate requests of data to a Time Series Service TS according to the embodiment of the invention, whereby it might query for raw data and/or precalculated data, i.e., based on the needs of said Application APP. Hence, the Application can decide which service is requested, so that this optionality is schematically depicted by the spotted arrows from the Application APP to the Time Series Service TS.

As can be seen furthermore, the Time Series Service TS consequently comprises two entities that can handle both requests. One is a first API, e.g. run by a first module, that allows for aggregation of sensor data, that may be called 'Aggregate API' AGGD_API, the other is a second API, e.g. run by a second module, that can handle requests (queries) of raw data, that may be called 'Raw Data Query API' RAWD_API.

Additionally, as has been made apparent due to the dotted lines the Application APP can generate a request for the Aggregate API AGGD_API and/or the Raw Data Query API RAWD_API.

As can be seen, when the Application APP queries the Raw Data Query API RAWD_API, this entity retrieves the raw data from a 'Time Series Raw Data Store' TSRAWD_STORE that the Time Series Service TS comprises, where, as depicted, raw data time series collected by at least one sensor SENS are stored, whereby the collection respectively the ingestion of the data may be performed by methods such as but not limited to MQTT (Message Queuing Telemetry Transport), which is a lightweight messaging protocol, Bulk-import, which is a method of uploading large amounts of data at once and/or PUT, which is usually understood as an HTTP request method used in, especially REST, APIs.

If said Application APP on the other hand queries for aggregated data, i.e., generates a request from the Aggregate Data API AGGD_API, the Aggregate Data API AGGD_API in turn queries further entities for this purpose.

One of these entities that said Time Series Service TS comprises and which the Aggregate Data API AGGD_API may query provides a calculation of aggregates, e.g. like the one according to the state of the art discussed in the introductory part of the present description. This calculation may for instance be run by a third module and may be called an "On-The-Fly-Calculation" OTFC that for its functionality in turn may query the Time Series Raw Data Store TSRAWD-STORE, which is again schematically depicted by the dotted arrow.

On the other hand, the Aggregate Data API AGGD_API can query is a store, that the Time Series Service TS according to the embodiment of the invention incorporates, where pre-calculated aggregates data is stored, and which may therefore be called 'Pre-Calculated Aggregate Data Store' PCAGGD-STORE.

According to the invention the Aggregate Data API AGGD_API can also call a Query Analyzer QA that is according to the embodiment of invention part of said Time Series Service TS. Said Query Analyzer QS in turn may call a 'Pre-Calculated Aggregates Configuration' PCAGG-CONF entity, e.g. run by a forth module, that is according to the embodiment of the invention modified in such a manner that it can serve said Query Analyzer according to the embodiment of the invention and is for the same reason furthermore connected to a 'Pre-Calculation Aggregate Service' PCAGG-SERV, e.g. run by a sixth module.

As can be seen, said Pre-Calculation Aggregate Service PCAGG-SERV is provided with ingested time series from the Sensor SENS and queries also the Pre-Calculated Aggregates Data Store PCAGGD-STORE.

What is also schematically depicted with the dotted arrow pointing to said OTFC is, that this is an optional feature, i.e., the Time Series Service TS according to the invention works also without this entity, as the inventive update of the

Apparently, the Time Series Service TS according to the depicted embodiment of the arrangement of the invention, when further developed with optionally utilizing such On-The-Fly-Calculation" OTFC, allows for an on-the-fly calculation of aggregates, like the one with the drawbacks according to the state of the art, and can do so as it on one hand provides a function according to the invention to analyze the query characteristics on the sensor data, i.e., how often aggregates for a certain sensor data with what interval-length is requested and on the other hand comprises a said Pre-Calculated Aggregate Service PCAGG-SERV, that is according to the embodiment able to pre-calculate aggregates based on configuration data considering e.g. what sensor data with what aggregation function in which interval-length is computed.

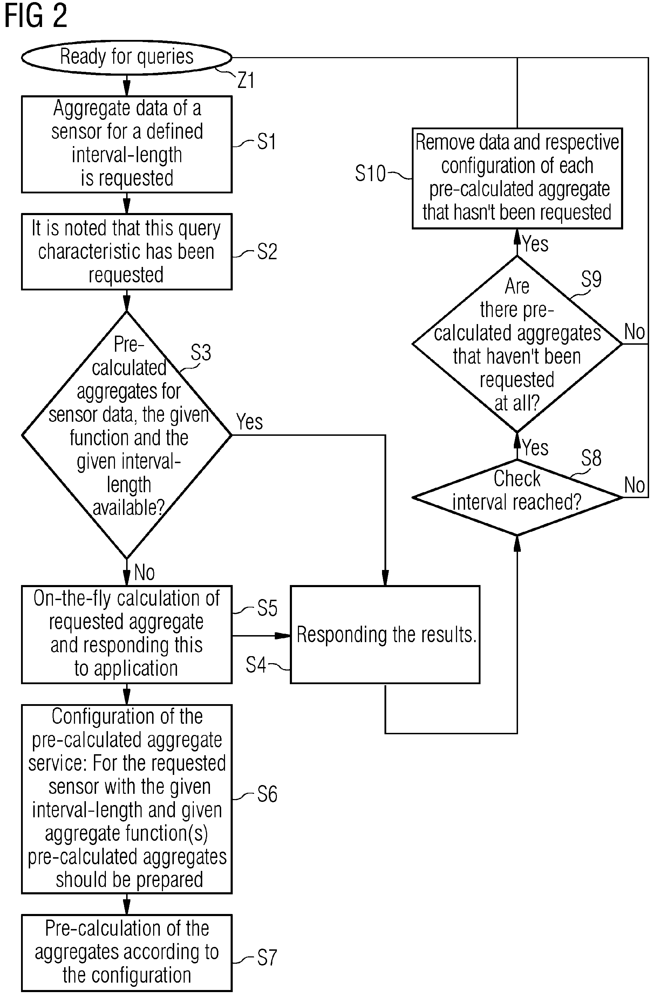

Further advantages and details of this embodiment and the invention will become apparent in connection with the description of Figure 2 that discloses a flow chart of an embodiment of the method according to the invention, which is according to the embodiment carried out by the embodiment of the arrangement according to Figure 1. Hence, it refers to the entities in Figure 1 that are carrying out the respective method steps by means of reference signs of Figure 1.

The flow chart depicted in Figure 2 starts, but is not limited to such a beginning, with a first status Z1, where the Time Series Service TS according to the invention is ready to service, respectively active. As is further depicted the embodiment of a processing of the method of the invention starts with a first step S1 where the Time Series Service TS according to the embodiment is triggered to deliver a aggregate data. Such a trigger might come from an application, e.g. the Application APP, that is requesting aggregate data of a Sensor SENS, for a defined interval-length, as can be seen in the flow chart. Such Application APP may be part of an loT domain, such as but not limited to industrial domain or building automation domain that at least partly implementing loT.

After such a request trigger was detected according to the first step S1, the embodiment of the method of the invention moves on to a second step S2 where the Time Series Service TS is followed by a second step S2, where the Time Series Service TS also notes that this query characteristic has been requested, which is one possible embodiment of the Query Analysis QA function as described in Figure 1.

The Time Series Service TS is subsequent third step S3 checking whether pre-calculated aggregates for sensor data and the given function and the given interval-length is available or not.

If the pre-calculated aggregates for sensor data with the given function and the given interval-length is given, the third step S3 is directly followed by t fourth step S4, where the Time Series Service TS is responding the results.

If on the other hand the pre-calculated aggregates for sensor data with the given function and the given interval-length is not given, then the Time Series Service TS is, e.g. by querying the On-the-fly Calculation OTFC entity for a calculation, providing the requested aggregate on-the-fly in a fifth step S5 and continuing with also responding this to the Application APP in said fourth step S4

If the pre-calculated aggregates for sensor data with the given function and the given interval-length was not given, then the third Step S3 is not only followed by the fourth step S4 but
also with a sixth step S6, where the Time Series Service TS configures the Pre-Calculated Aggregate Service PCAGG_SERV in such a manner that for the requested Sensor SENS with the given interval-length and given aggregate function(s), such as but not limited to sum, average, integral, median, among others, over different time intervals like minute, hour, day, month, and year, pre-calculated aggregates should be prepared. With that a definition is performed for what data point in which granularity aggregates should be calculated.

In a seventh step S7 the Pre-Calculated Aggregate Service PCAGG-SERV pre-calculates the aggregates according to the updated configuration. This a beneficial further development of the method according to the invention, as for subsequent queries that need pre-calculated aggregate data for this configuration a response can be delivered immediately.

According to the embodiment of the method according to the invention, on-the-fly, i.e., ad-hoc calculation along with configuration an update S5... S7 can be done after the first query that required an on-the-fly calculation. After yet another embodiment of the method according to the invention this might also be done additionally or alternatively after a certain threshold was reached, e.g., when this has happened more than 3 times. This allows for checking if the requested pre-calculated aggregate data is really needed on a regular basis.

For this development and/or as an alternative or addition to the on-the-fly calculation steps S5...S7 the method might be further developed in such a manner that a fault management process is triggered, e.g., at least responding to the query that for the requested configuration no pre-calculated aggregate data is available, in case the third step S3 has a negative result.

The depicted embodiment of the method of the invention may also continue with both steps S4 or S4,S5... S7 that are branching off from the third step S3 the sixth step S6, regardless of the third step S3 having a negative answer or not. This might be especially beneficial for another alternative or additional embodiment that analyses the queries for pre-calculated aggregates in such a manner that it checks whether time intervals of two different queries overlap, in order to at least partly use pre-calculated data-points.

For example, n case of overlapping time-interval, e.g. the overlapping time-intervals are T1 and T2 (not depicted), wherein for T1 the Time Series Service TS has pre-calculated aggregate(s) and for T2 the Time Series Service TS does not have pre-calculated aggregate(s), then the Time Series Service TS according to said further embodiment is enabled response from pre-calculated aggregate data-point(s) from T1 and to calculate on-the-fly aggregates from T2.

This might also be beneficial, if data for more sensor SENS signals, say a signal A and B (not depicted), are requested, but only for A already available. Then for B an on-the-fly calculation is performed, i.e., one branch entered, and can be responded with data for A, which is immediately available and thus handled by the other branch.

The embodiment of the method according to the invention shown in Figure 2 continues after the fourth step S4 with an eighth step S8, which is an alternative or additional further beneficial development, where the Time Series Service TS is checking, e.g., by evaluating the configuration that was noted in the second step S2, if a predetermined time-interval, e.g., several days or weeks, has been reached and if so in the following ninth step S9, if data from pre-calculated aggregates has been requested at all.

If there is a configuration for a pre-calculated aggregate available that has not been requested for a while (i.e., a month), then this configuration gets removed from the Pre-Calculated Aggregates Configuration PCAGG-CONF and also in the Pre-Calculated Aggregate Data Store PCAGGD-STORE the respective the pre-calculated aggregate data gets deleted in a tenths step S10.

Hence, with these steps S8... S10 there is also a self-cleaning aspect included that only those data are kept as pre-calculated aggregates that is really required.

It should be noted that this is a strong simplification of the process according to the embodiment of the invention.

The transition of the method starting from the fourth step S4 to these self-cleaning steps S8...S10 corresponds to a strong simplification of the embodiment example according to the invention and generally is alternatively or additionally embodied in such a manner, that it can take place independently or in parallel to any of the steps of the processing of a query according to the invention and thus follows any suitable step according to the invention or is initiated in parallel thereto, e.g., as a separate flow to said query processing steps according to the invention.

The self-cleaning steps S8, S9 and S10 can, for example, according to a further development of the method according to the invention, for example be triggered by the PCAGG-SERV which, according to such a further development, is checking whether new pre-calculated aggregates are generated or must be deleted as not used.

If one out of the checks in the eighth step S8 or the ninth step S9 is negative, then the according to the depicted embodiment the process steps S1... S10 returns to the first state Z1, where the Time Series Service is ready to serve one of its inventive functions, e.g., start again with another request according to the first step S1.

The same applies after data and configuration was removed in the tenth step S10.

As becomes apparent the embodiments of the invention among other have the following advantages:
- Not all sensor data need to be provided as pre-calculated aggregate for different interval-length. That is, much less computing power is required and less storage for the calculated results.
- According to a further embodiment only those data is kept pre-calculated that is really requested by applications.
- There is no manual configuration required in order to find the right set of data that should be kept pre-calculated - the system itself is able to identify this.
   ∘ The invention is that flexible, that according to an embodiment it is still possible to add to the configuration of pre-calculated aggregates for manually defined pre-calculated aggregates.
- Improved response time for subsequent requests on the same desired aggregated data.

Only The first request(s) for aggregated sensor data, especially with an unusual interval-length, e.g. 7 minutes takes longer than subsequent requests.

The invention, however, is not limited to the above-stated embodiments and further developments but comprises all embodiments and further developments that are covered by the scope of the claims having at least these advantages.

*Independent of the grammatical term usage, individuals with male, female or other gender identities are included within the term.*

## Claims

1. A method for processing data at least correlating with data of at least a sensor, especially applied in an Internet of things, "loT", domain, by means of a time series process, **characterized in that** the time series process is arranged in such a way that if pre-configured aggregate data specified in a query is at least partially unavailable for the time service process dependent of at least one parameter, which is at least correlating with the query, pre-configured aggregate data is made available for subsequent queries; and if the pre-configured aggregate data is completely available for the time service process, the pre-configured aggregate data is retrieved.

2. The method according to claim 1, **characterized in that**, if pre-configured aggregate data specified in a query is at least partially unavailable for the time service process at least the parts of the pre-configured aggregate data is generated ad-hoc and used to build the pre-configured aggregate data for subsequent queries.

3. The method according to claim 1, **characterized in that**, the updated pre-configured aggregate data is made available in such a manner that it is stored, especially in a database, in structured manner.

4. The method according to claim 1, comprising the further step of returning the at least parts of the pre-calculated aggregate results, if available and storing at least a characteristic of the query.

5. The method according to one of the preceding claims, **characterized in that** the time series process comprises at least a first process for pre-calculation of aggregate data of the sensor, a storage for storing pre-calculated aggregate data of the sensor and a second process for calculation of pre-calculated aggregate data of the sensor ad-hoc, **characterized by** the further steps:
a) Extracting configuration data from the query, especially the first parameter;
b) Checking for the availability of at least parts of the pre-calculated aggregate data defined by the configuration data;
c) Returning the pre-calculated aggregate, if available and storing the configuration data;
d) Performing an ad-hoc calculation of at least parts of the requested pre-calculated aggregate data by means of the first process, if the pre-calculated aggregate data is at least partially unavailable and responding at least the result of the calculation;
e) Updating the configuration of the first process;
f Prepare aggregates based on the configuration data;
g Pre-calculating the aggregate data according to the updated configuration by means of the first process;
h) Updating the pre-calculated aggregates in the storage for storing pre-calculated aggregate data with the aggregate data that was pre-calculated according to the updated configuration.

6. The method according to one of the preceding claims, **characterized in that** the configuration data comprises at least one of the following data: at least a parameter specifying the sensor data, at least a specified aggregation function and at least a value specifying an interval length.

7. The method according to one of the preceding claims, **characterized in that** updating the configuration of the first process is triggered, if the queried pre-calculated aggregate data is unavailable at least for the first time.

8. The method according to the preceding claims, **characterized in that** the parameters are monitored in such a manner as to check the degree of usage of the stored pre-calculated aggregate data.

9. The method according to the preceding claim, **characterized in that** the check is performed in such a way that the usage of each stored pre-calculated aggregate data is monitored, especially counted, and that at least a second parameter of the monitoring, especially a counted value, is evaluated, especially compared with a first predetermined threshold, and depending of the result, in particular if the counted value is below the first threshold, the pre-calculated aggregate data and the corresponding configuration data is removed from the respective storage, especially the first database.

10. The method according to the preceding claim, **characterized in that** the check is performed in such a way that raw-data of the sensor is stored, especially in a second database, and the usage said raw-data is monitored, especially counted, and that at least a second parameter of the monitoring, especially a counted value, is evaluated, especially compared with a second predetermined threshold, and depending of the result, in particular if the counted value is below the threshold, the pre-calculated aggregate data and the corresponding configuration data is manipulated in such a manner, that it is marked for archiving, in particular removal from the respective storage, especially the second database, to another storage, in particular a third database.

11. The method according to the preceding claim, **characterized in that**, the check is continuously repeated according to a predetermined time interval.

12. The method according to one of the preceding claims, **characterized in that**, the querying, the monitoring, the evaluation and or other intermediate results of the method steps according to one of the preceding claims, is at least partially used in connection with a deep-learning module, especially to train and/or query at least a deep-learning model in such a way that at least one of the method steps, in particular pre-calculation, deletion, removal and/or other intermediate steps of the method according to one of the preceding claims, is performed based on query results.

13. Arrangement, for processing data at least correlating with data of at least a sensor, especially applied in an Internet of things, "loT", domain, by means of a time series process, comprising means providing the functions of the method according to one of the preceding claims.
